# EUROPEAN PATENT APPLICATION

(11) **EP 3 236 030 A1**
(43) Date of publication of application: **25.10.2017**
(21) Application number: 15858502.6
(22) Date of filing: 07.10.2015
(51) Int. Cl.: F01N 3/08, B01D 53/62, F01N 3/10, F01N 3/24

(54) **CO2 RECOVERY DEVICE OF INTERNAL COMBUSTION ENGINE**

(30) Priority: 13.11.2014 JP 2014230285
(71) Applicant: Hitachi, Ltd., Tokyo 100-8280 (JP)
(72) Inventor: KANEEDA Masato, Tokyo 100-8280 (JP); ORITA Hisayuki, Tokyo 100-8280 (JP); ABE Motoyuki, Tokyo 100-8280 (JP); SUKEGAWA Yoshihiro, Tokyo 100-8280 (JP); ORYOJI Kazuhiro, Tokyo 100-8280 (JP); OKUDA Yuuki, Tokyo 100-8280 (JP)
(74) Representative: Strehl Schübel-Hopf & Partner
(86) International application number: PCT/JP2015/078435
(87) International publication number: WO 2016/076041

(57) **Abstract**

Provided is a CO₂ recovery device of an internal combustion engine capable of efficiently recovering CO₂ emitted from an internal combustion engine or CO₂ in the air, and of efficiently synthesizing methane using CO₂. A CO₂ recovery device of an internal combustion engine includes a CO₂ capturing material disposed at a through channel of gas including CO₂ to capture CO₂ in the gas, and methanation catalyst to let CO₂ desorbed from the CO₂ capturing material react with H₂ obtained from a H₂ supply source to generate methane. The CO₂ recovery device has a function to raise temperature of the CO₂ capturing material using heat generated from the internal combustion engine to desorb CO₂.

## Description

### Technical Field

The present invention relates to a CO₂ recovery device of an internal combustion engine, configured to reduce CO₂ emitted from an internal combustion engine, including CO₂ emitted from an automobile or a diesel engine, and CO₂ in the air.

### Background Art

Recently from the viewpoint of reducing global warming, a reduction in the amount of CO₂ emitted from internal combustion engines and the amount of CO₂ in the air has been demanded.

As one method for reducing CO₂ emitted from an internal combustion engine, attempts have been made to improve the fuel consumption of the internal combustion engine and accordingly reduce the amount of CO₂ generated. In order to reduce the emission amount of generated CO₂, a technique for synthesizing fuel using CO₂ emitted from an automobile is disclosed (Patent Literatures 1 and 2).

### Citation List

### Patent Literatures

Patent Literature 1: JP 2010-235736 A
Patent Literature 2: JP 2009-269983 A

### Summary of Invention

### Technical Problem

Patent Literature 1 describes a system including a CO₂-absorbing apparatus and a CO₂-releasing apparatus, which is configured to synthesize fuel using recovered CO₂ as a raw material. This literature describes a heat supplier as well, and this heat supplier is configured to apply thermal energy to the CO₂-releasing apparatus. This literature, however, does not disclose how to supply heat, and a lot of thermal energy will be required to release CO₂.

Patent Literature 2 describes a technique of synthesizing methane using CO₂ emitted from an engine. In this technique, however, any material is not used to recover CO₂. Therefore, the concentration of CO₂ during fuel synthesis is low, and the efficiency of fuel synthesis is presumably low.

The present invention aims to provide a CO₂ recovery device of an internal combustion engine capable of efficiently recovering CO₂ emitted from an internal combustion engine or CO₂ in the air, and of efficiently synthesizing methane using CO₂.

### Solution to Problem

A CO₂ recovery device of an internal combustion engine, includes a CO₂ capturing material disposed at a through channel of gas including CO₂ to capture CO₂ in the gas, and methanation catalyst to let CO₂ desorbed from the CO₂ capturing material react with H₂ obtained from a H₂ supply source to generate methane. The CO₂ recovery device has a function to raise temperature of the CO₂ capturing material using heat generated from the internal combustion engine to desorb CO₂.

### Advantageous Effects of Invention

The present invention enables the recovery of CO₂ emitted from an internal combustion engine or CO₂ in the air sophisticatedly. Further the present invention enables synthesis of methane using the recovered CO₂ as a raw material, and the methane can be used as fuel of the internal combustion engine. Therefore the present invention can reduce the fuel consumption sophisticatedly and can reduce the CO₂ emission due to the fuel consumption.

### Brief Description of Drawings

Fig. 1 shows the configuration including a CO₂ capturing material and a methanation catalyst to recover CO₂ in exhaust gas from an engine and convert the CO₂ into methane.
Fig. 2 shows the configuration including a heat exchanger at a through channel of exhaust gas from the engine.
Fig. 3 shows the configuration including a thermoelectric conversion element at a through channel of exhaust gas from the engine.
Fig. 4 shows the configuration including a CO₂ capturing material and a methanation catalyst to recover CO₂ in the air and convert the CO₂ into methane.
Fig. 5 shows the configuration of a ship coming with a diesel engine including a CO₂ capturing material and a methanation catalyst to recover CO₂ in exhaust gas from the engine and convert the CO₂ into methane.

### Description of Embodiments

The following describes the present invention in details.

Typically exhaust gas emitted from an inner combustion engine as in an automobile, a diesel engine or the like contains a few % to a few tens % of CO₂, and a reduction in the amount of CO₂ emitted from such an internal combustion engine can lead to the prevention of global warming. Meanwhile, the air also contains CO₂ of about 400 ppm, and a reduction in CO₂ in the air also leads to the prevention of global warming.

A further study by the present inventors shows that, in a CO₂ recovery device of an internal combustion engine having a CO₂ capturing material disposed at a through channel of gas including CO₂ to capture CO₂ in the gas, and methanation catalyst to let CO₂ desorbed from the CO₂ capturing material react with H₂ obtained from a H₂ supply source to generate methane, the CO₂ recovery device has a function to raise temperature of the CO₂ capturing material using heat generated from the internal combustion engine to desorb CO₂, whereby CO₂ emitted from the internal combustion engine and CO₂ in the air can be recovered efficiently.

### (CO₂ capturing material)

The CO₂ capturing material used is not limited especially. Examples of the CO₂ capturing material include activated charcoal, zeolite and solid oxides. Liquid such as amine solution also can be used for this.

The capturing amount of CO₂ by the CO₂ capturing material, the capturing temperature and the CO₂ desorption temperature can be optimized by changing elements used, their additive amount and an adding method of some materials.

The concentration of CO₂ flowing into the CO₂ capturing material varies with the type of gas flowing into the CO₂ capturing material. When the gas is exhaust gas of an internal combustion engine, the concentration may be up to 10% or more. When the gas is the air, the expected concentration is about 400 ppm. The type of the CO₂ capturing material has to be selected, depending on the amount and the concentration of CO₂ flowing into the CO₂ capturing material.

Two or more of the CO₂ capturing material may be disposed, which enables the repetition of the CO₂ capturing step and the CO₂ desorption step. When the CO₂ capturing material is disposed at the through channel of exhaust gas or at the through channel of the air, the capturing ability of the CO₂ capturing material to capture CO₂ will exceed its limit as the CO₂ capturing reaction by the CO₂ capturing material continues. In such a case, the through channel for exhaust gas is switched so as to introduce exhaust gas or the air into another CO₂ capturing material, whereby CO₂ in the exhaust gas or the air can be captured continuously. For the CO₂ capturing material that has captured the enough amount of CO₂, gas flowing thereto is stopped. Then the temperature of the CO₂ capturing material is allowed to rise so as to desorb CO₂ from the capturing material. Thereby CO₂ can be recovered therefrom.

The temperature of the CO₂ capturing material can be raised by using heat emitted from the engine, whereby CO₂ can be efficiently desorbed in terms of the energy. For instance, a part of exhaust gas from the engine is extracted and heat of the extracted gas is given to the CO₂ absorbing material via a heat medium, whereby the temperature of the CO₂ absorbing material can be raised.

Alternatively, the CO₂ capturing material may be of a rotary type so as to enable the repetition of the CO₂ capturing step and the CO₂ desorbing step.

### (Internal combustion engine)

An internal combustion engine of the present invention is not limited especially as long as it generates CO₂. For instance, examples of the internal combustion engine include internal combustion engines of a gasoline-powered vehicle, a diesel-powered vehicle, and a natural gas-powered vehicle and internal combustion engines used in a constructing machine, an agricultural machine and a ship. This also includes stationary engines.

### (Methanation catalyst)

Methanation catalyst is not limited especially as long as it enables reaction of CO₂ and hydrogen to promote the following methanation reaction.

CO₂+4H₂→CH₄+2H₂O

For better performance of methanation, the methanation catalyst includes: a porous carrier made of inorganic compound, and a catalyst active component loaded on the porous carrier, the catalyst active component including at least one type selected from Pt, Pd, Rh, and Ni. The porous carrier includes at least one type selected from Al, Ce, La, Ti and Zr. An oxide having a large specific surface area may be used as the porous carrier of the methanation catalyst, whereby Pt, Pd, Rh or Ni can be dispersed highly and the methanation performance can be increased. Especially an oxide including Al may be used as the porous carrier, whereby high methanation performance can be obtained stably. The specific surface area of the porous carrier of the present invention is preferably in the range of 30 to 800 m²/g, and particularly preferably 50 to 400 m²/g.

Two types or more components selected from Pt, Pd, Rh, and Ni may be included as the catalyst active component.

The total loading amount of Pt, Pd, Rh and Ni as the catalyst active component is preferably 0.0003 molar part to 1.0 molar part in terms of elements relative to 2 molar parts of the porous carrier. If the total loading amount of Pt, Pd, Rh and Ni is less than 0.0003 molar part, its loading effect is not sufficient. If the total loading amount thereof exceeds 1.0 molar part, the specific surface area of the active component itself is lowered, and the cost of catalyst rises.

Herein the term "molar part" refers to the ratio of each component included in terms of the molar number. For instance, when the loading amount of component B is 1 molar part relative to 2 molar parts of component A, this refers to component B being loaded with the ratio of 1 relative to 2 of component A in terms of the molar number, independently of the absolute amount of component A.

Methane obtained through the methanation reaction is introduced into the internal combustion engine as its fuel source, whereby the fuel use of the internal combustion engine can be reduced. A water electrolysis device may be disposed at the internal combustion engine so as to generate hydrogen through electrolysis of water. In this case, water obtained through the methanation reaction can be used as the supply source of water.

### (Supply source of H₂)

A method for generating H₂ also is not limited especially. For instance, a tank for hydrogen may be disposed at the internal combustion engine, and H₂ may be supplied from the tank to the methanation catalyst. In this case, hydrogen as gas is directly compressed or is liquefied, and H₂ in such a state may be put in a tank.

H₂ carrier such as ammonia, methanol, organic hydride, or hydrogen storing alloy may be used for the supply source. Since ammonia, methanol, organic hydride, or the like is liquid at normal temperatures, they require a storage tank. However, this enables the conveyance of H₂ with lower energy than in the case of conveying H₂ itself. Heat is required to extract H₂ from these H₂ carriers. Similarly to the case of raising the temperature of the CO₂ absorbing material, exhaust heat from the engine may be used, and the temperature of the H₂ carrier can be raised efficiently.

In another effective configuration, a water electrolysis device may be disposed at the internal combustion engine, and hydrogen can be generated through electrolysis of water. In this case, a method for electrolysis of water is not limited especially as long as H₂ is obtained through the following reaction.

2H₂O→2H₂+O₂

Examples of the method for electrolysis of water include an alkaline water electrolysis method and a method using solid polymer. Electricity is required for electrolysis of water. In that case, electricity can be generated by recovering heat of exhaust gas from the internal combustion engine, for example, and the obtained electricity can be used for water electrolysis.

### (Method for heat recovery)

Exhaust gas emitted from an internal combustion engine can be 400° C or more. Therefore electricity can be efficiently obtained using heat of the exhaust gas. One of the method therefor includes the use of combination of a heat exchanger, an expansion machine and a working medium.

The working medium is fed to the heat exchanger in advance for circulation. When exhaust gas flows into this heat exchanger, the working medium changes from liquid to gas due to the heat of exhaust gas. The working medium changed into gas is sent to the expansion machine, whereby electricity can be generated. Thereafter, the working medium is sent to a condenser, and returns to liquid there. In this way, the working medium is circulated so as to recover heat of the exhaust gas, whereby electricity can be generated. The obtained electricity can be used for water electrolysis.

The working medium used is not limited especially as long as it satisfies the above intended use. Examples of the working medium include ethylene glycol and water.

Exhaust gas subjected to heat recovery may be introduced to a CO₂ capturing material. In general the effect of capturing CO₂ by the CO₂ capturing material increases with exhaust gas at lower temperatures. Therefore the above method for recovery of heat of exhaust gas is effective also for improving the ability of the CO₂ capturing material to capture CO₂.

### (Thermoelectric conversion element)

As one method for obtaining electricity using heat of the exhaust gas, a thermoelectric conversion element may be used. A thermoelectric conversion element may be disposed at the through channel of exhaust gas so that exhaust gas comes in contact with the thermoelectric conversion element. Thereby heat of exhaust gas can be converted into electricity, and the electricity can be obtained. The obtained electricity can be used as electricity for water electrolysis.

The type of the thermoelectric conversion element used is not limited especially. Examples of the thermoelectric conversion element include an element including bismuth and tellurium, an element including lead, and an element including silicon and germanium.

### (Installation of combustion catalyst)

A catalyst may be installed between a heat exchanger or a thermoelectric conversion element and an engine included in the internal combustion engine, and the catalyst has a function of burning at least one type or more of H₂, CO and hydrocarbon in exhaust gas. Such catalyst installed can purify H₂, CO and hydrocarbon in exhaust gas and can raise the temperature of exhaust gas downstream of the catalyst because of the purifying reaction. Therefore the efficiency of recovering exhaust heat by the heat exchanger or the thermoelectric conversion element can be increased more.

The catalyst is not limited especially as long as it can burn H₂, CO and hydrocarbon. For instance, this may be catalyst including at least one type selected from Pt, Pd and Rh as a catalyst active component that is loaded on a porous carrier including alumina.

### (Recovery CO₂ in the air)

The air may be fed to the CO₂ capturing material, whereby CO₂ in the air also can be captured. In this case, the step of recovering CO₂ may include the combination of the CO₂ capturing step and the CO₂ desorbing step. After the CO₂ capturing material captures a certain amount of CO₂, this CO₂ capturing material may be replaced with a new one.

### (Configuration of the materials)

A solid CO₂ capturing material and a porous carrier or an active component used as the methanation catalyst may be loaded on a substrate. A suitable substrate is made of cordierite, ceramic including Si-Al-O, or a heat-resisting metal substrate made of stainless steel, which have been used conventionally. When the substrate is used, the loading amount of these materials is preferably 10 g or more and 300 g or less with respect to 1 L of the substrate for improving the ability of capturing CO₂ and the ability of methanation. If the amount is 10 g or less, the ability of capturing CO₂ and the ability of methanation deteriorate. If the amount is 300 g or more, a problem, such as easy clogging at the through channel of the gas, occurs when the substrate has a honeycomb shape.

The solid CO₂ capturing material and the methanation catalyst can be prepared by a physical method such as impregnation, kneading, coprecipitation, sol-gel method, ion-exchange method and evaporation, or by a method using a chemical reaction, for example.

The starting raw materials of the solid CO₂ capturing material and the methanation catalyst may include various compounds, such as nitric acid compound, chloride, acetic acid compound, complex compound, hydroxide, carbonate compound and organic compound, metals, and metal oxides. For instance, when two types or more of elements are combined as the catalyst active component, a co-impregnation method may be used using impregnating solution in which the active components exist in the same solution. Thereby the catalyst components can be loaded homogeneously.

The shape of the solid CO₂ capturing material and the methanation catalyst can be adjusted appropriately depending on the intended use. For instance, the shape may be a honeycomb shape that is obtained by coating a honeycomb structure made of various substrate materials, such as cordierite, Si-Al-O, SiC, or stainless steel, with the purifying catalyst of the present invention. Other shapes include a pellet shape, a plate shape, a granular shape, and a powder shape. In the case of a honeycomb shape, the substrate is preferably a structure made of cordierite or Si-Al-O.

The following describes examples of the present invention.

### Example 1

### <Combination of CO₂ absorbing material and methanation catalyst>

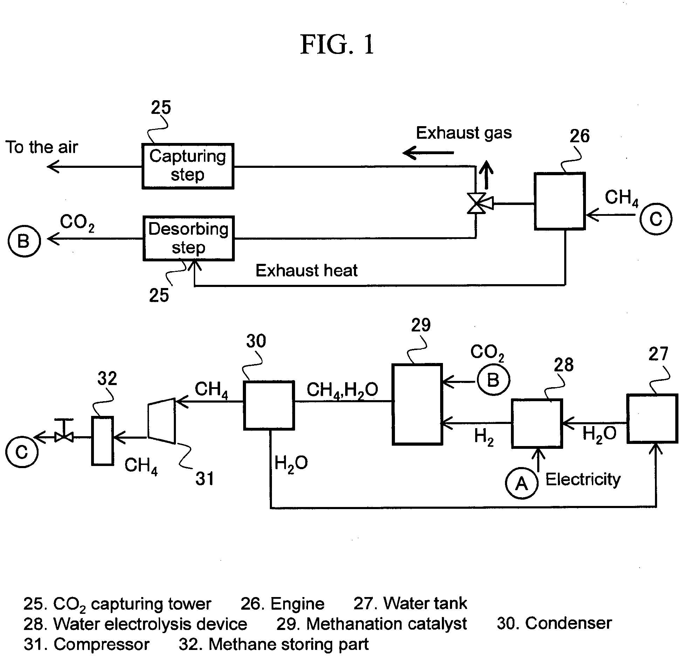

Fig. 1 shows an example including the combination of a CO₂ capturing material and methanation catalyst. Two CO₂ capturing materials are disposed. One of the CO₂ capturing material is to feed exhaust gas from the engine. When the amount of CO₂ recovered by this CO₂ capturing material reaches the saturation, then the line of exhaust gas is switched so that the exhaust gas flows into the other CO₂ capturing material.

In Fig. 1, exhaust gas emitted from an engine 26 flows into one of the CO₂ capturing material. After CO₂ in the exhaust gas is captured by the CO₂ capturing material, the gas is emitted to the air. Gas does not flow through the other CO₂ capturing material, and exhaust heat extracted from the engine is given to the CO₂ absorbing material via a heat medium so as to raise the temperature of the CO₂ capturing material. Thereby CO₂ captured by the CO₂ capturing material is desorbed from the CO₂ capturing material. The line of exhaust gas is switched so that such CO₂ capturing step and CO₂ desorbing step are repeated with these CO₂ capturing materials. In this way, CO₂ in the exhaust gas is captured.

Next, the obtained CO₂ is introduced into methanation catalyst 29. Water from a water tank 27 is electrolyzed by an water electrolysis device 28 to obtain H₂. The obtained H₂ also is introduced into the methanation catalyst 29. Then CO₂ and H₂ react at the methanation catalyst 29, whereby gas including CH₄ and water can be obtained. This gas is introduced into a condenser 30 to separate water, and CH₄ only is obtained. The separated water is returned to the water tank 27, and is reused for water electrolysis. The obtained CH₄ is compressed by a compressor 31 and is then stored in a methane storing part 32. CH₄ is introduced into the engine 26 as needed, and is used as fuel of the engine.

Such a configuration can reduce the amount of CO₂ emitted from the engine and can reduce fuel as well.

### Example 2

### <Method for heat recovery>

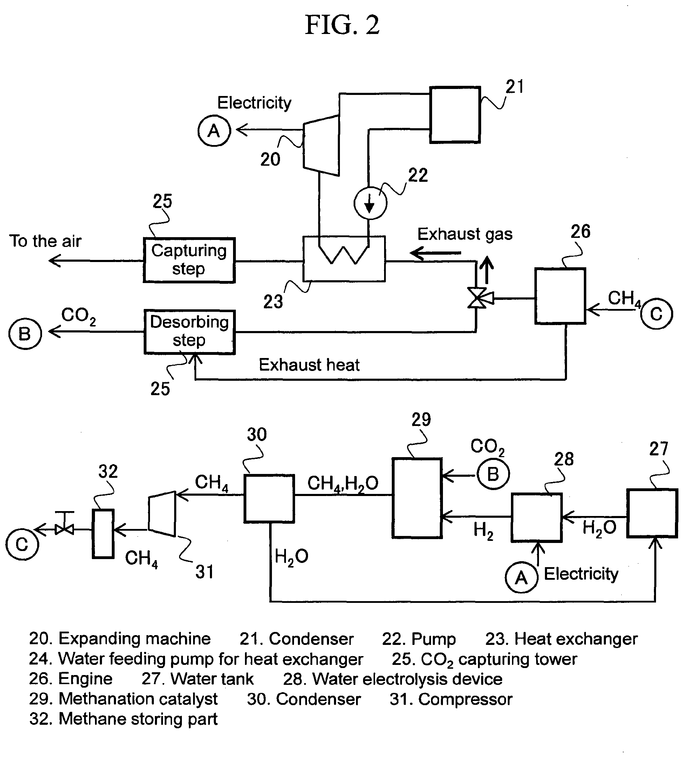

Fig. 2 shows an example including a heat exchanger 23 upstream of the CO₂ capturing material in the CO₂ capturing step. The engine 26 in this example is a gasoline engine. A working medium flows through the heat exchanger 23. When exhaust gas flows into this heat exchanger 23, the working medium changes from liquid to gas due to the heat of exhaust gas. The obtained gas is introduced into an expansion machine 20 to generate electricity. In this way electricity can be obtained. The working medium gas passing through the expansion machine 20 is introduced into the condenser 21 to return to liquid. The liquid circulates by a pump 22.

The thus obtained electricity is used for water electrolysis by a water electrolysis device 28.

Although not illustrated in Fig. 2, the capturing step and the desorbing step are conducted while switching the lines of exhaust gas. To this end, the gas line of the desorption step also includes a heat exchanger 23. Note here that, since gas does not flow through the heat exchanger at the desorbing step, the working medium does not circulate in this case.

Such a configuration can reduce the amount of electricity used for electrolysis of water.

For instance, when water is electrolyzed by a water electrolysis device using electricity of 2 kW, the amount of H₂ obtained will be 15 mol/h. Since the methanation reaction is CO₂+4H₂ → CH₄+2H₂O, 3.7 mol/h of CO₂ can be converted into methane using all of the H₂ obtained. That is, 3.7 mol/h of CO₂ can be reduced from the exhaust gas, meaning that CO₂ emitted from the engine can be reduced by about 4%. Further in this case, 3.7 mol/h of methane can be obtained, and the obtained methane can be used as fuel. Thereby the consumption of the fuel can be reduced by about 6%. That is, CO₂ emission can be reduced by about 6%. Accordingly considering both of the recovery of CO₂ and the reduction of the fuel, the CO₂ emission can be reduced by about 10%. Since the resulting reduction in CO₂ emission varies with the amount of H₂ obtained, such CO₂ emission can be reduced more by increasing the amount of electricity during water electrolysis or by supplying H₂ from a H₂ tank.

### Example 3

### <Example including thermoelectric conversion element>

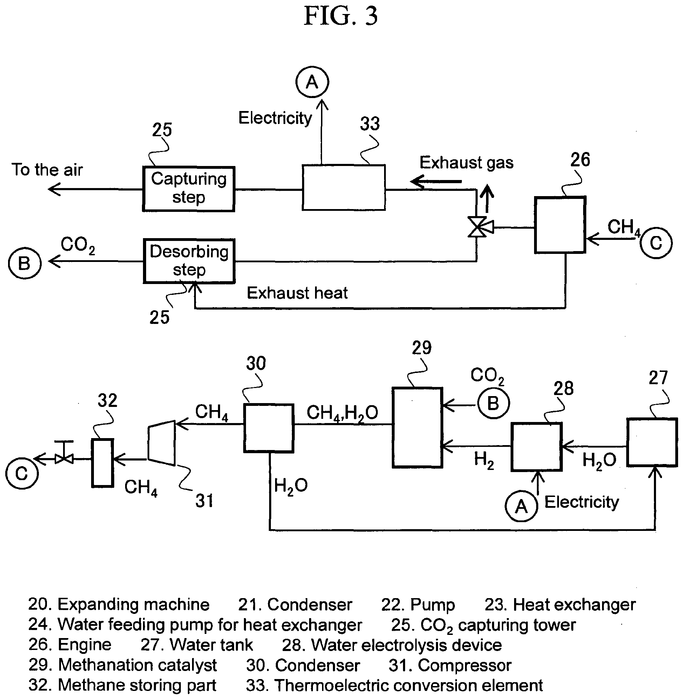

Fig. 3 shows an example including a thermoelectric conversion element 33 upstream of the CO₂ capturing material in the CO₂ capturing step. When exhaust gas flows into this thermoelectric conversion element, heat of the exhaust gas is converted into electricity. The thus obtained electricity is used for water electrolysis by a water electrolysis device 28.

Although not illustrated in Fig. 3, similarly to the case of Fig. 2, the capturing step and the desorbing step are conducted while switching the lines of exhaust gas. To this end, the gas line of the desorption step also includes a thermoelectric conversion element 31. Such a configuration can reduce the amount of electricity used for electrolysis of water.

### Example 4

### <Recovery of CO₂ in the air>

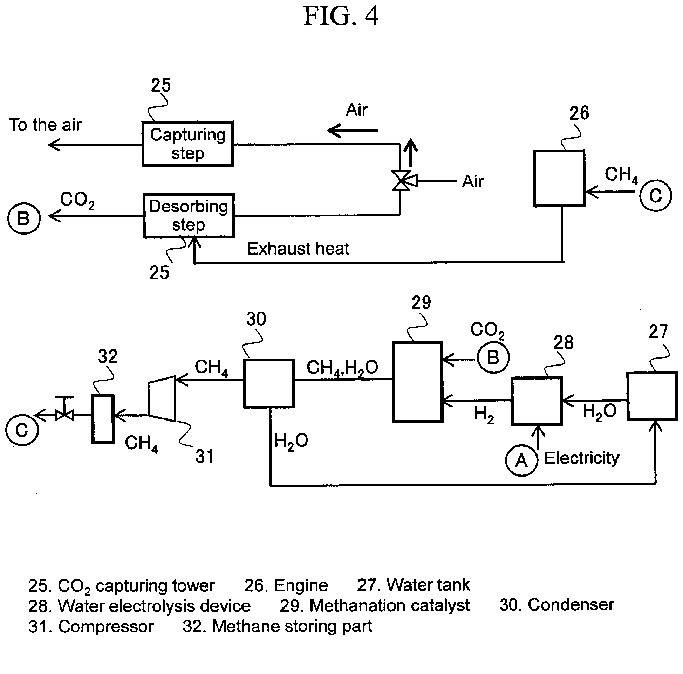

Fig. 4 shows the configuration enabling the recovery of CO₂ in the air. The configuration is similar to Fig. 1 other than that gas introduced into the CO₂ capturing material is not exhaust gas from an engine but the air. This configuration enables the recovery of CO₂ in the air, and so CO₂ in the air can be reduced.

### Example 5

### <Application to diesel ships>

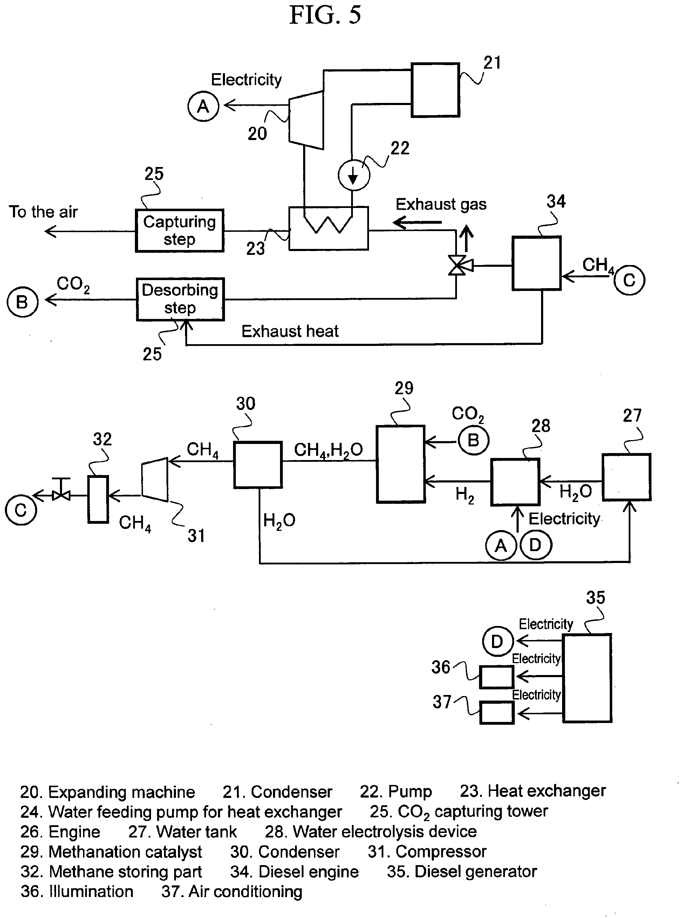

Fig. 5 shows the configuration of Example 2 that is applied to a ship coming with a diesel engine. The engine 34 in this example is a diesel engine. Similarly to Example 2, heat of exhaust gas emitted from the diesel engine 34 is recovered and is converted into electricity. The thus obtained electricity can be introduced into a water electrolysis device 28, and can be effectively used for water electrolysis. The configuration of Example 5 includes a diesel generator 35 as well. Electricity D generated by the diesel generator 35 also can be used for water electrolysis. Electricity A obtained by converting exhaust heat can be used together, whereby the usage of the electricity D obtained from the diesel generator 35 can be reduced effectively. The electricity reduced can be used for illumination or air conditioning.

### Reference Signs List

- 20: Expanding machine
- 21: Condenser
- 22: Water suction pump
- 23: Heat exchanger
- 24: Water suction pump for heat exchanger
- 25: CO₂ capturing tower
- 26: Engine
- 27: Water tank
- 28: Water electrolysis device
- 29: Methanation catalyst
- 30: Condenser
- 31: Compressor
- 32: Methane storing part
- 33: Thermoelectric conversion element
- 34: Diesel engine
- 35: Diesel generator
- 36: Illumination
- 37: Air conditioning

## Claims

1. A CO₂ recovery device of an internal combustion engine, comprising a CO₂ capturing material disposed at a through channel of gas including CO₂ to capture CO₂ in the gas, and methanation catalyst to let CO₂ desorbed from the CO₂ capturing material react with H₂ obtained from a H₂ supply source to generate methane, wherein
the CO₂ recovery device has a function to raise temperature of the CO₂ capturing material using heat generated from the internal combustion engine to desorb CO₂.

2. The CO₂ recovery device of an internal combustion engine according to claim 1, wherein the methane is used as fuel of the internal combustion engine.

3. The CO₂ recovery device of an internal combustion engine according to claim 1 or 2, wherein the H₂ supply source is a device for electrolysis of water.

4. The CO₂ recovery device of an internal combustion engine according to claim 3, wherein at least a part of heat generated from the internal combustion engine is recovered as electricity, and water is electrolyzed using the electricity to obtain H₂.

5. The CO₂ recovery device of an internal combustion engine according to claim 4, further comprising: a heat exchanger at the through channel of exhaust gas generated from the internal combustion engine, the heat exchanger converting liquid into gas using heat of the exhaust gas generated from the internal combustion engine; and an expansion machine to receive the obtained gas and convert the gas into electricity.

6. The CO₂ recovery device of an internal combustion engine according to claim 4 or 5, further comprising: a thermoelectric conversion element disposed at a through channel of exhaust gas generated from the internal combustion engine, the thermoelectric conversion element converting heat of the exhaust gas generated from the internal combustion engine into electricity.

7. The CO₂ recovery device of an internal combustion engine according to claim 5 or 6, further comprising catalyst disposed between the heat exchanger or the thermoelectric conversion element and the engine, the catalyst burning at least one type of H₂, CO and hydrocarbon in the exhaust gas.

8. The CO₂ recovery device of an internal combustion engine according to any one of claims 1 to 7, wherein gas including CO₂ is the air.

9. The CO₂ recovery device of an internal combustion engine according to any one of claims 1 to 8, further comprising a means of replacing the CO₂ capturing material with another CO₂ capturing material when an amount of CO₂ captured by the CO₂ capturing material reaches saturation.

10. The CO₂ recovery device of an internal combustion engine according to claim 1, wherein the methanation catalyst includes inorganic compound as a carrier including at least one type selected from Al, Ce, Si, Ti and Zr and a catalyst active component loaded on the carrier including at least one type selected from Rh, Pt, Pd, Ir, Ni, Mn, and Cu.
